# EUROPÄISCHE PATENTSCHRIFT

(11) **EP 1 224 111 B1**
(45) Veröffentlichungstag und Bekanntmachung des Hinweises auf die Patenterteilung: **02.01.2004**
(21) Anmeldenummer: 00967489.6
(22) Anmeldetag: 19.10.2000
(51) Int. Cl.: B62D 29/04

(54) **FAHRZEUGZELLE AUS FASERVERSTÄRKTEM THERMOPLASTISCHEM KUNSTSTOFF**
FIBER-REINFORCED THERMOPLASTIC VEHICLE CELL
CELLULE DE VEHICULE EN MATIERE THERMOPLASTIQUE RENFORCEE PAR DES FIBRES

(30) Priorität: 20.10.1999 CH 192299
(43) Veröffentlichungstag der Anmeldung: 24.07.2002
(73) Patentinhaber: RCC Regional Compact Car AG, 8700 Küsnacht (CH)
(72) Erfinder: JAGGI, Diego, CH-8049 Zürich (CH)
(86) Internationale Anmeldenummer: PCT/CH2000/000567
(87) Internationale Veröffentlichungsnummer: WO 2001/028845

(56) Entgegenhaltungen:
- EP-A- 0 618 128
- US-A- 4 573 707

## Beschreibung

Die Erfindung betrifft eine Fahrzeugzelle aus faserverstärktem thermoplastischem Kunststoff gemäss Oberbegriff von Patentanspruch 1 sowie ein Verfahren zu deren Herstellung. Eine derartige Fahrzeugzelle ist aus der Patentschrift DE-G-4 423 642 bekannt. Da mit faserverstärkten Kunststoffen wichtige Vorteile gegenüber bisherigen metallischen Fahrzeugzellen erreicht werden können wie Korrosionsfestigkeit, Lärmdämmung und Gewichtsreduktionen wird seit langem versucht, eine tragende Fahrzeugzelle aus faserverstärktem Kunststoff zu schaffen, welche in einem kostengünstigen Serienherstellverfahren produzierbar ist. Dies konnte bisher jedoch noch nicht erreicht werden, da entweder der Aufbau und die Herstellung einer Fahrzeugzelle zu aufwändig und damit zu teuer und auch zu zeitaufwändig ist, oder aber da einfache Herstellverfahren, z.B. kurzfaserverstärktes Spritzgiessen, bei weitem nicht die erforderlichen hohen mechanischen Eigenschaften ergeben. So werden für Rennfahrzeuge und Prototypen beispielsweise Fahrzeugzellen in Schalenbauweise aus duromeren Kohlefaser-Verbundwerkstoffen in Autoklav-Technik hergestellt, was im wesentlichen eine äusserst teure Einzelstück-Fertigung darstellt. Andererseits ist beispielsweise aus der WO97/14602 eine Kunststoff-Karosserie bekanntgeworden, die aus vier Teil-Schalen zusammengesetzt wird, welche Schalen in kurzfaserverstärktem Spritzguss hergestellt werden. Mit dieser Bauweise kann jedoch auch keine tragende Fahrgastzelle gebildet werden, da die notwendigen mechanischen Festigkeiten und Crash-Anforderungen bei weitem nicht erreicht werden, so dass hier ein tragender stabiler Stahlrahmen als Bodengruppe und Tragstruktur eingesetzt werden muss.

Es ist daher Aufgabe der vorliegenden Erfindung, eine tragende Fahrzeugzelle aus faserverstärktem Kunststoff, insbesondere für Kraftfahrzeuge, zu schaffen, die eine kostengünstige automatischen Serienfertigung ermöglicht, sowohl für grössere Serien als auch für kleinere Serien von z.B. 1000 Stück, welche Fahrzeugzelle leicht ist und dennoch die üblichen mechanischen Festigkeits- und Steifigkeitsanforderungen erfüllen kann, insbesondere auch bezüglich Crash-Sicherheit, und welche überdies eine gute Langzeitstabilität bezüglich Verformung aufweist. Insbesondere die bekannten thermoplastischen Verfahren mit Kurz- oder Langfaser-Verstärkung wie Spritzguss und Fliesspressen unterliegen unter Last einem Kriechen, so dass sich eine entsprechend gebaute Fahrzeugzelle schon im Stand im Laufe der Jahre wesentlich deformieren würde.

Diese Aufgabe wird erfindungsgemäss gelöst durch eine Fahrzeugzelle nach Anspruch 1 und mittels eines Verfahrens zu deren Herstellung nach Anspruch 22.

Durch die eine Tragstruktur bildenden integrierten Endlosfaser-Stränge, welche mit der Langfaser-Masse zusammen verpresst werden, und durch die geometrische Anordnung der Endlosfaser-Stränge in einer Bodenstruktur auf zwei Niveaus mit relativ grossem Abstand und mit vertikalen Verbindungswänden wird eine rasch, einfach und kostengünstig herstellbare, leichte Fahrzeugzelle geschaffen mit besonders guten mechanischen Eigenschaften.

Die abhängigen Patentansprüche betreffen vorteilhafte Weiterbildungen der Erfindung, die für verschiedene Anwendungen und Ausführungsvarianten besondere Vorteile ergeben bezüglich rascher und einfacher Herstellbarkeit, mechanischen Eigenschaften, günstigen Herstellungs- und Montagekosten und auch für weitere Zusatzfunktionen.

Im folgenden wird die Erfindung anhand von Ausführungsbeispielen und Figuren weiter erläutert. Dabei zeigen:
- Fig. 1: schematisch den Aufbau einer erfindungsgemässen Fahrzeugzelle mit integrierten Endlosfaser-Strängen oder -Bändern in einer oberen und einer unteren Bodenfläche,
- Fig. 2: einen Querschnitt durch eine Bodenstruktur,
- Fig. 3: eine Bodenstruktur mit kastenförmigen Längselementen und diagonalen EndlosfaserSträngen,
- Fig. 4: eine Bodenstruktur mit zwei seitlichen kastenförmigen Längselementen,
- Fig. 5: eine Bodenstruktur mit kastenförmigen Längsund Querelementen,
- Fig. 6: eine aus zwei Halbschalen gebildete Doppelbodenstruktur,
- Fig. 7: ein Beispiel einer Fahrzeugzelle mit Bodenstruktur und Rahmenaufbau,
- Fig. 8a, b: halb-offene und geschlossene Trägerprofile,
- Fig. 9a, b: zwei zusammengesetzte Teile einer Fahrzeugzelle mit kraftübertragenden Verbindungen,
- Fig. 10a,b,c: ein weiteres Beispiel einer Fahrzeugzelle mit integrierter Endlosfaser-Tragstruktur,
- Fig. 11: die Zusammensetzung einer Fahrzeugzelle aus mehreren Teilen,
- Fig. 12: illustriert die Herstellung von Strukturteilen aus Langfaser-Matrix und integrierten Endlosfaser-Strängen,
- Fig. 13a, b: ein weiteres Beispiel einer Doppelbodenstruktur mit Verrippungen und Sicken,
- Fig. 14: ein Beispiel mit gerundeten Längsträgern,
- Fig. 15: eine Bodenstruktur mit nicht-ebenen Bodenflächen,
- Fig. 16: eine Bodenstruktur mit abgestuften Bodenflächen,
- Fig. 17: eine Verbindung von Bodenstruktur mit einem Hilfsrahmen,
- Fig. 18: eine Verstärkung der Bodenstruktur mittels Rippen und Sicken,
- Fig. 19: ein weiteres Beispiel einer aus wenigen Teilen zusammengesetzten Fahrzeugzelle.

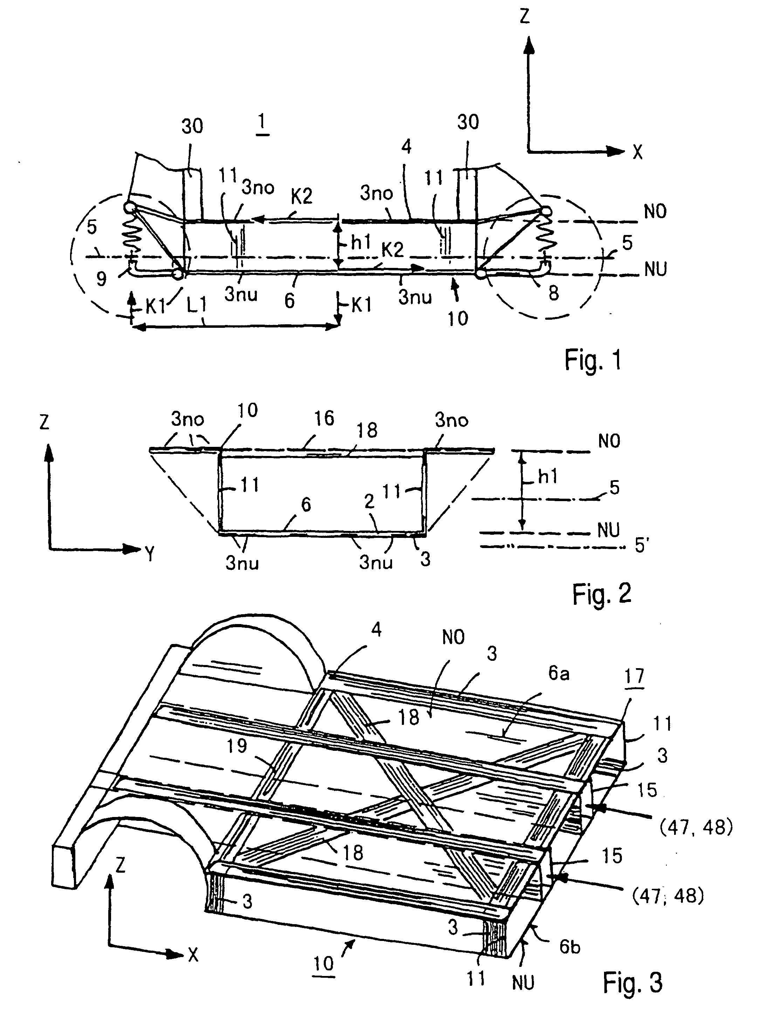

Fig. 1 illustriert schematisch den Aufbau einer erfindungsgemässen Fahrzeugzelle 1, welche aus einer formbildenden, langfaser-verstärkten thermoplastischen Matrix 2 mit integrierten Endlosfaser-Strängen oder -Bändern 3 aufgebaut ist. Die integrierten Endlosfaser-Stränge bilden eine räumliche Tragstruktur 4, die eine Bodenstruktur 10 enthält. Im mittleren Bereich der Fahrzeugzelle, zwischen einer Vorderradaufhängung 8 und einer Hinterradaufhängung 9, sind durchgehende hochfeste längs verlaufende Endlosfaser-Stränge 3no in einer oberen Bodenfläche bzw. Niveau NO sowie längs verlaufende Endlosfaser-Stränge 3nu in einer unteren Bodenfläche bzw. Niveau NU unterhalb der Achsebene 5 integriert. Die untere und die obere Bodenfläche sind durch im wesentlichen vertikale Schubkräfte übertragende Wände 11 miteinander verbunden und die Bodenstruktur 10 ist mit der Vorderradaufhängung 8 und der Hinterradaufhängung 9 verbunden. Um eine besonders stabile und steife Fahrzeugzelle zu schaffen, beträgt der relativ grosse Höhenabstand h1 zwischen oberer und unterer Bodenfläche NO, NU im mittleren Bereich mindesten 15 cm. Je nach Art und Ausgestaltung des Fahrzeugs inklusive einem Rahmenaufbau 30 kann der Höhenabstand h1 auch 20 - 30 cm betragen. Durch die Anordnung der hochfesten Endlosfaser-Stränge in den beiden unterschiedlichen Bodenflächen bzw. Niveaus NO, NU mit relativ grossem Abstand h1 wird grosse Stabilität, Steifigkeit und auch eine gute Momentaufnahme des Fahrzeugeigengewichts im Stand erreicht. Damit wird auch ein Langzeitkriechen verhindert. Dies wird im Prinzip illustriert durch die Gewichtskräfte K1 mit Abstand L1 und die Gegenkräfte K2 in den Endlosfaser-Strängen des Niveaus NO, NU mit Abstand hl.
(Momentausgleich: K1 . L1 = K2 . h1)

Für Strassenfahrzeuge liegen die obere Bodenfläche bzw. Niveau NO oberhalb der Achsebene 5 und die untere Bodenfläche bzw. Niveau NU unterhalb der Achsebene 5. Dies ergibt eine günstige Aufnahme aller auftretenden Kräfte von Fahrbetrieb, Radaufhängung, Eigenlasten und auch Crash-Lasten durch die Bodenstruktur. Für Spezialfahrzeuge ist es jedoch auch möglich, beide Niveaus NO und NU oberhalb oder unterhalb der Achsebene 5 anzuordnen, z.B. für Fahrzeuge mit besonders hoher Bodenfreiheit oder für Tieflader mit grossen Rädern. Entscheidend ist aber auch hier ein genügend grosser Abstand h1 zwischen den beiden Niveaus. Die Fig. 2 illustriert ein Beispiel, wo beide Niveaus NO, NU oberhalb der Achsebene 5' liegen.

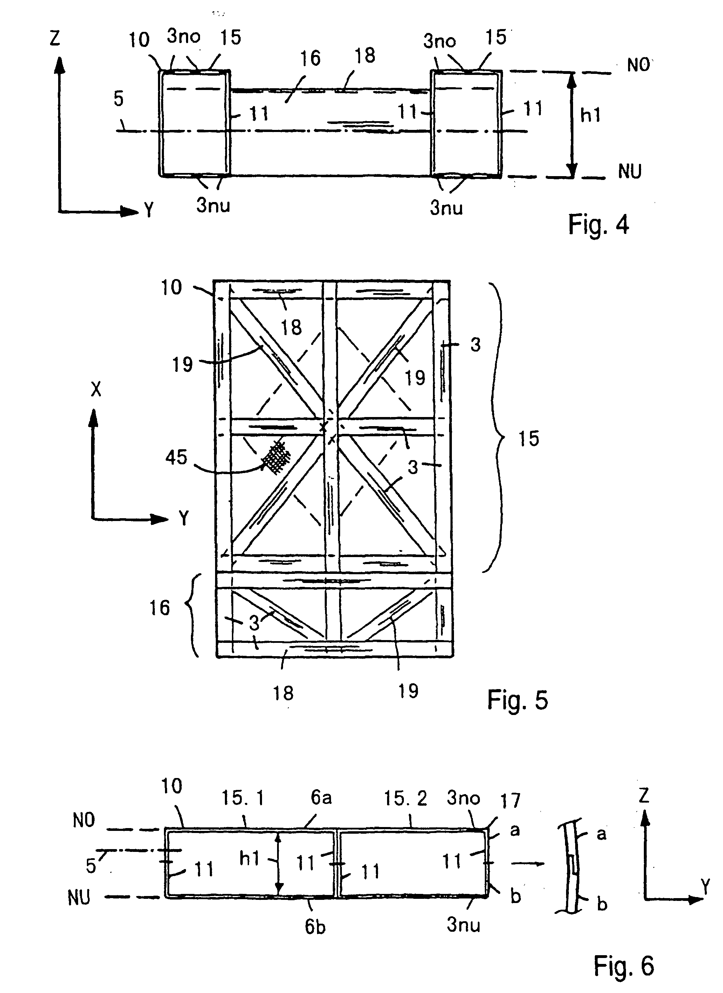

Fig. 2 zeigt im Querschnitt ein weiteres Beispiel einer erfindungsgemässen Bodenstruktur, hier als hutförmiger Querschnitt, mit oberen und unteren Endlosfaser-Bänden oder -Strängen 3no, 3nu in der Langfaser-Matrix 2. Mit Vorteil kann eine solche Struktur durch ein kastenförmiges Querelement 16 mit integrierten quer verlaufenden Endlosfaser-Strängen 18 verstärkt sein, wie auch in Fig. 4 und 5 gezeigt wird.

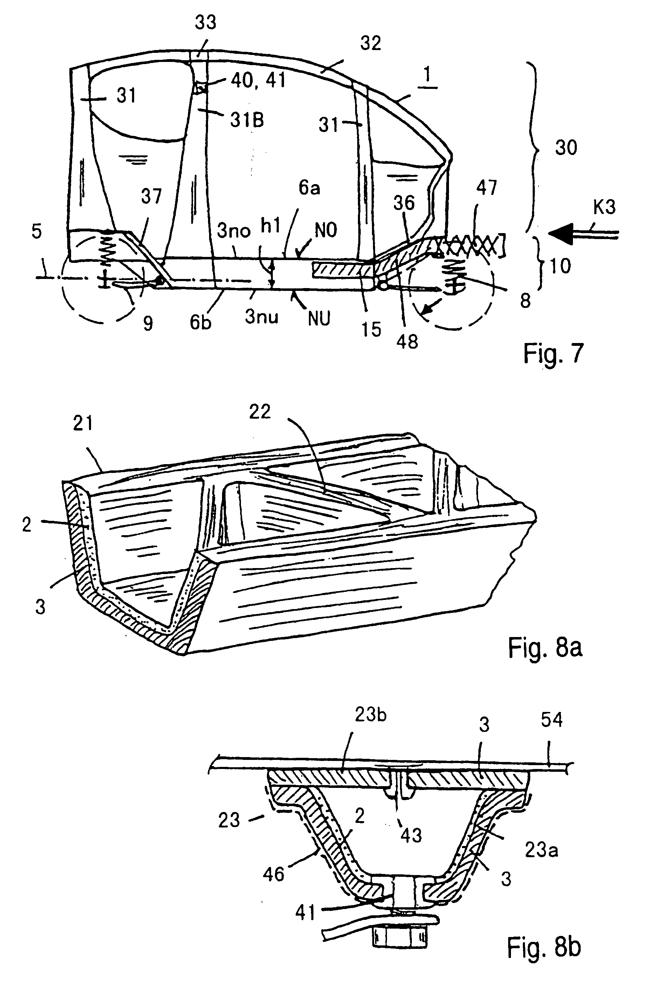

Fig. 3 zeigt eine Bodenstruktur 10 mit kastenförmigen Längselementen 15 mit integrierten längs verlaufenden Endlosfaser-Strängen 3 in der oberen und unteren Bodenfläche NO, NU. In diesem Beispiel sind zwei durchgehende innere Längskastenträger 15 in der Bodenstruktur 10 enthalten, die beispielsweise die Kräfte eines Hilfsrahmens 48 (wie zu Fig. 7 beschrieben) oder einer Crash-Struktur 47 aufnehmen können, wobei hier durch grossflächige Verbindung mittels Kleben und formschlüssige Anpassung eine einwandfreie Krafteinleitung realisiert werden kann. Dieses Beispiel zeigt überdies auch eine Doppelbodenstruktur 17, gebildet aus einer oberen und einer unteren Bodenplatte 6a, 6b, sowie zusätzliche quer und diagonal verlaufende integrierte Endlosfaser-Stränge oder Bänder 18, 19, welche eine fachwerkartige Tragstruktur 4 bilden.

Fig. 4 zeigt im Querschnitt eine weitere Ausführung einer Bodenstruktur 10 mit beidseitigen äusseren kastenförmigen Längselementen 15, welche hier einen relativ grossen Höhenabstand h1 von z.B. 20 - 25 cm zwischen oberer und unterer Bodenfläche NO, NU aufweisen. Diese sind zudem durch ein hinteres kastenförmiges Querelement 16 mit integrierten quer verlaufenden Endlosfaser-Strängen 18 verbunden (siehe Fig. 5), so dass schon mit der Bodenstruktur eine besonders torsionssteife, feste und leichte Fahrzeugzelle gebildet werden kann. Diese eignet sich beispielsweise auch für Cabriolets. Damit können in Modulbauweise auf der gleichen Bodenstruktur verschiedene Fahrzeugaufbauten realisiert werden.

Fig. 5 illustriert eine Bodenstruktur 10, die kastenförmige Längselemente 15 wie auch ein kastenförmiges Querelement 16 enthält. Die Tragstruktur weist hier neben den integrierten Längsfaser-Strängen 3 auch quer und diagonal verlaufende Endlosfaser-Stränge 18, 19 und auch noch ein zusätzlich integriertes flächiges Fasergewebe 45 als Verstärkung zur Erhöhung der Schubsteifigkeit auf. Die Verteilung und Anordnung der Endlosfaser-Bänder 3 in der ganzen Fahrzeugzelle erfolgt generell entsprechend den auftretenden Kräften.

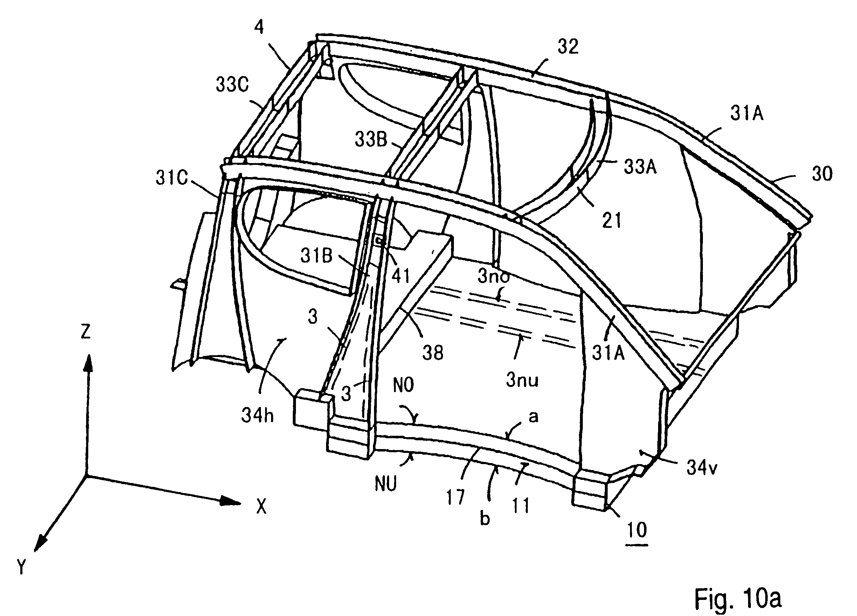

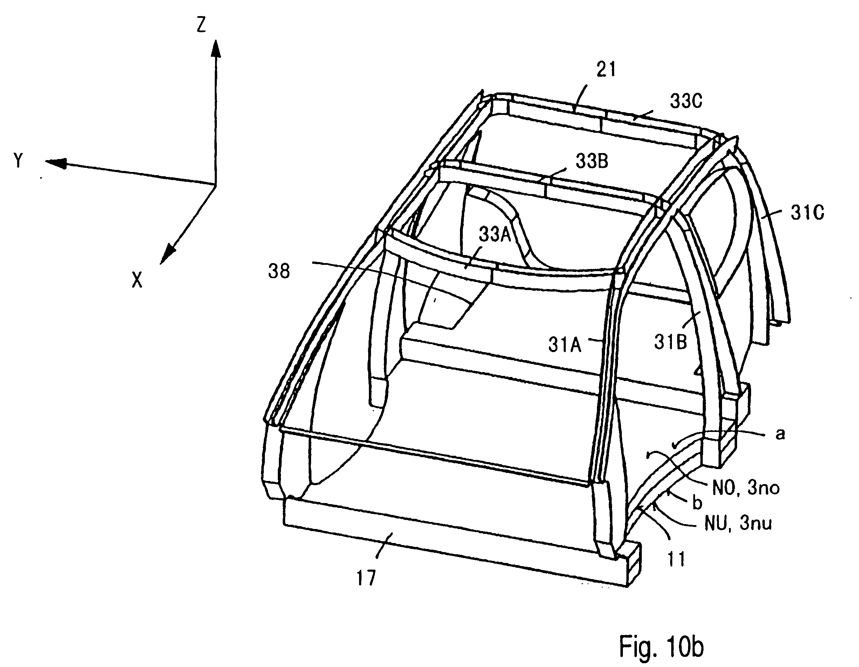

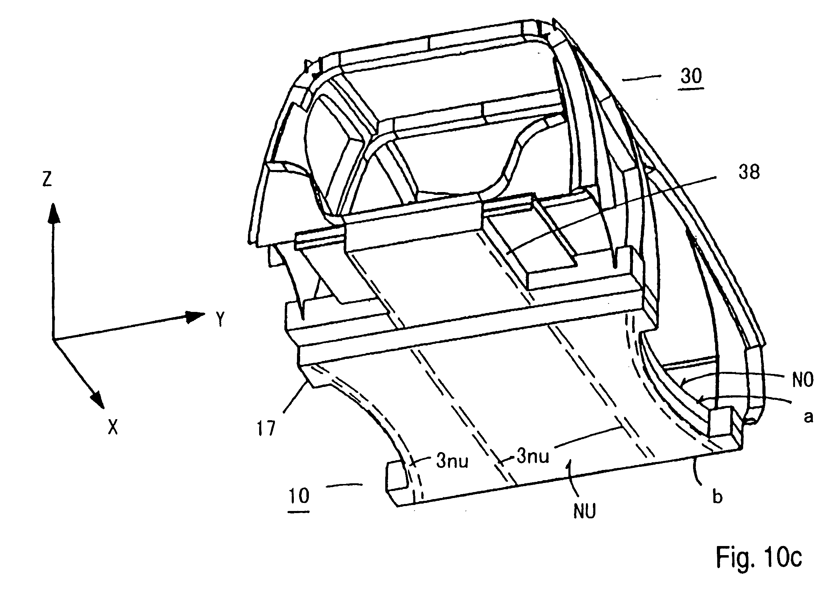

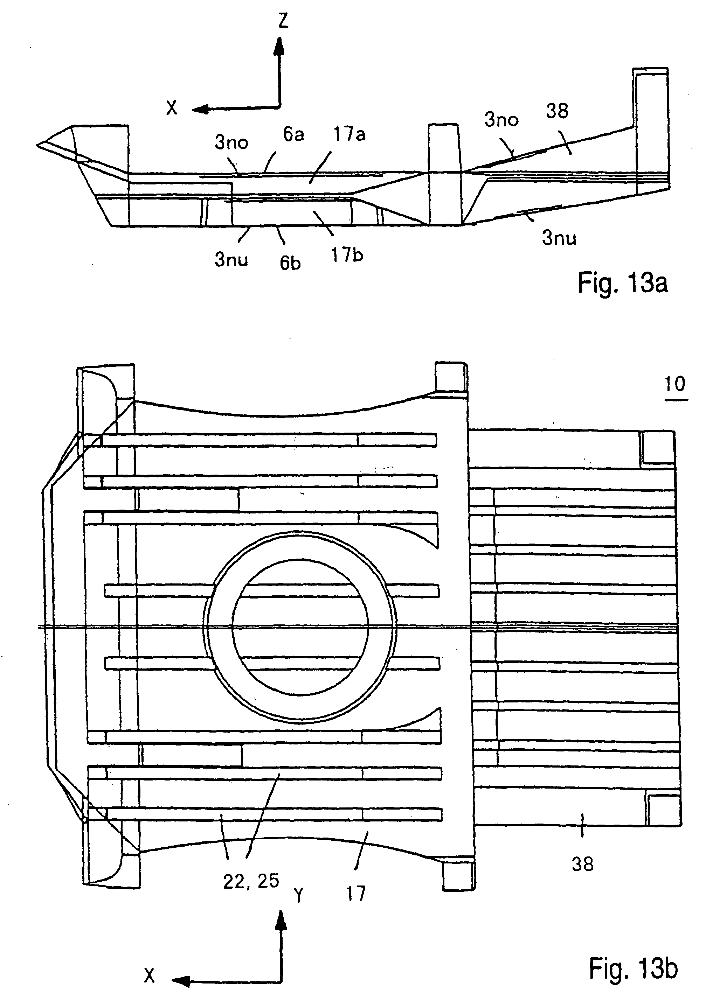

Fig. 6 zeigt im Querschnitt schematisch ein Beispiel einer aus zwei Halbschalen a und b gebildeten Doppelbodenstruktur 17 mit oberer und unterer Bodenplatte 6a, 6b. Der Doppelboden enthält hier zwei kastenförmige Längselemente 15.1, 15,2. Die Verbindung der beiden Halbschalen a und b kann durch thermoplastisches Verschweissen, Kleben oder auch Verschrauben und Nieten erfolgen, wobei eine formschlüssige Anpassung der Teile a und b zusätzlich vorteilhaft ist. Auch die Beispiele der Fig. 10 und 13 werden aus je zwei Halbschalen a und b zusammengesetzt. Für den Pressprozess müssen alle vertikalen Wände eine minimale Ausformschräge von z.B. 1.5 - 2° aufweisen. Dies gilt auch für Rippen und Sicken.

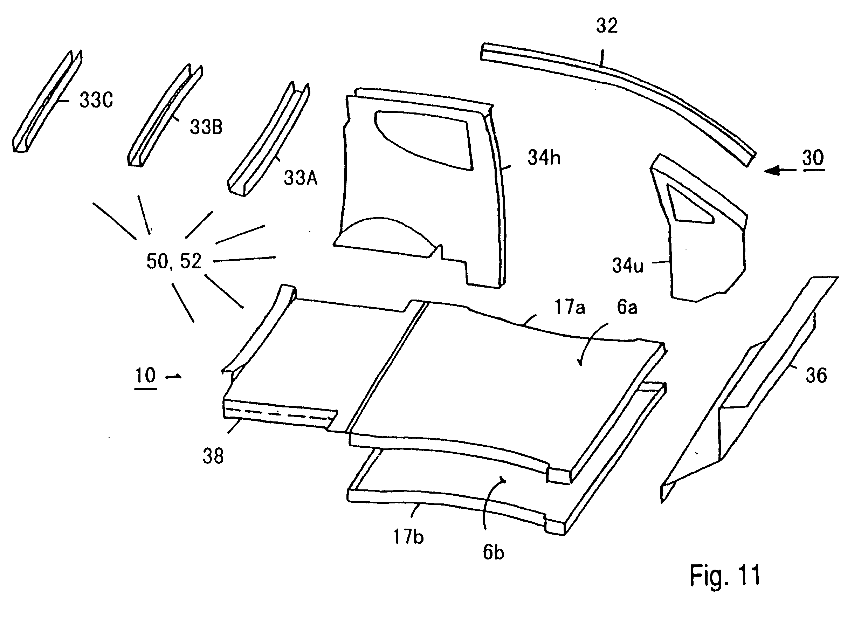

Fig. 7 zeigt ein Beispiel einer Fahrzeugzelle 1 mit einer Bodenstruktur 10 und einem damit verbundenen Rahmenaufbau 30, die aus verschiedenen Teilen bestehen: aus Seitenträgern vorn und hinten 31v, 31h, Dachträgern 32 und Dachholmen oder Querverbindungen 33, einer Spritzwand 36 und einer hinteren Querwand 37 (siehe Fig. 11). Ein metallischer Hilfsrahmen 48 für die Vorderradaufhängung 8 ist in die Doppelbodenstruktur bzw. in kastenförmigen Längselementen 15 (wie in Fig. 3 gezeigt) grossflächig und formschlüssig in die Bodenstruktur 10 eingefügt und mit der Fahrzeugzelle verbunden. An diesem Hilfsrahmen 48 ist auch ein Crash-Element 47 angeordnet. Diese sind mit der Radaufhängung 8 so ausgebildet, dass bei einem Zusammenstoss (K3) der Vorderbau über einem Deformationsweg zusammengestaucht und unter die Fahrzeugzelle abgeleitet werden kann, möglichst ohne Beeinträchtigung der Fahrzeugzelle. An der B-Säule 31B des Rahmenaufbaus ist hier überdies ein integriertes metallisches Insert 40 gezeigt in Form eines Krafteinleitungselements 41 für die Sicherheitsgurt-Befestigung. Dies ist auch in Fig. 8b illustriert. Die Hinterradaufhängung 9 ist analog mittels geeigneter Krafteinleitungselemente mit der Bodenstruktur 10 verbunden.

Die Fig. 8a und b zeigen Trägerprofile des Rahmenaufbaus 30 mit integrierten U-förmigen Endlosfaser-Strängen 3 in der Langfaser-Masse 2. Fig. 8a zeigt ein halb-offenes Trägerprofil 21 mit einer Langfaser-Verrippung 22 als zusätzlicher Verstärkung und Versteifung.

Die Fig. 8b zeigt ein Hutprofil 23a, welches mit einem Deckel 23b zu einem geschlossenen Profil 23 verbunden wird. Auch diese Verbindung der Teile a und b kann beispielsweise durch thermoplastisches Verschweissen erfolgen. Geschlossene Profilteile 23 werden vorzugsweise in besonders stark belasteten Bereichen eingesetzt, beispielsweise zur Aufnahme von Kräften, wie hier mit dem integrierten Krafteinleitungselement 41, z.B. für eine Sicherheitsgurt-Befestigung, gezeigt ist. In Fig. 8b wird weiter illustriert, dass an die Fahrzeugzelle und den Rahmenaufbau nicht-tragende flächige Kunststoffteile 54 als Karosserieaussenseite befestigt werden können. Solche Kunststoff-Karosserieteile können leicht und einfach z.B. in Spritzguss hergestellt werden. Dies ergibt einen besonders leichten Fahrzeugaufbau. Die Kunststoffteile 54 können dabei z.B. auf die Fahrzeugzelle aufgeklebt werden oder auch mittels Fixierelementen 43 wie Clips demontierbar und auswechselbar einfach aufgesteckt werden. Fig. 8b zeigt weiter eine Oberflächenkaschierung 46 für den Innenraum, welche in einem gemeinsamen Herstellungsschritt erfolgen kann, indem Langfaser-Matrix 2, Endlosfaser-Stränge 3 und eine Oberflächenkaschierungsschicht 46 zusammen verpresst werden.

Das Verfahren zur Herstellung von erfindungsgemässen Fahrzeugzellen bzw. Fahrzeugzellenteilen wird in Fig. 12 illustriert. Die linke Seite zeigt das lufthaltige, watteartige, plastifizierte langfaserverstärkte MatrixMaterial 2 vor dem Verpressen, das auf positionierte vorkonsolidierte plastifizierte Endlosfaser-Stränge 3 in einer Pressform aufgebracht ist. Beim Verpressen wird die Luft aus der Langfaser-Matrix ausgepresst und eine innige Verbindung mit den integrierten Endlosfaser-Strängen 3 der Tragstruktur 4 hergestellt, so dass durch den Pressvorgang in einem Schritt ein kompakter Aufbau gemäss rechter Seite der Fig. 12 entsteht, ohne schädliche Lufteinschlüsse. Die innige thermoplastische Verbindung (Verschmelzung) der Langfaser-Matrix mit den Endlosfaser-Strängen ergibt eine optimale Kraftübertragung und -Verteilung in der räumlichen Tragstruktur 4. Überdies kann in diesem kombinierten Verfahren auch eine Oberflächen-Kaschierung 46 auf einer Seite eingelegt werden oder es kann auch beispielsweise zwischen die Endlosfaser-Stränge oder -Bänder 3 und die Langfaser-Matrix 2 ein Verstärkungsgewebe 45 eingebracht (siehe Fig. 5) und in einem Schritt zusammen verpresst werden.

Die Fahrzeugzelle und die Bodenstruktur werden aus mehreren Teilen oder Elementen 50 zusammengesetzt, wobei einwandfreie kraftübertragende Verbindungen zwischen den verschiedenen Teilen hergestellt werden. Dies kann im Prinzip durch thermoplastisches Verschweissen, durch Kleben oder auch durch Verschrauben an integrierten Metall-Inserts erfolgen, vorzugsweise unterstützt durch formschlüssige Anpassung der verschiedenen Teile.

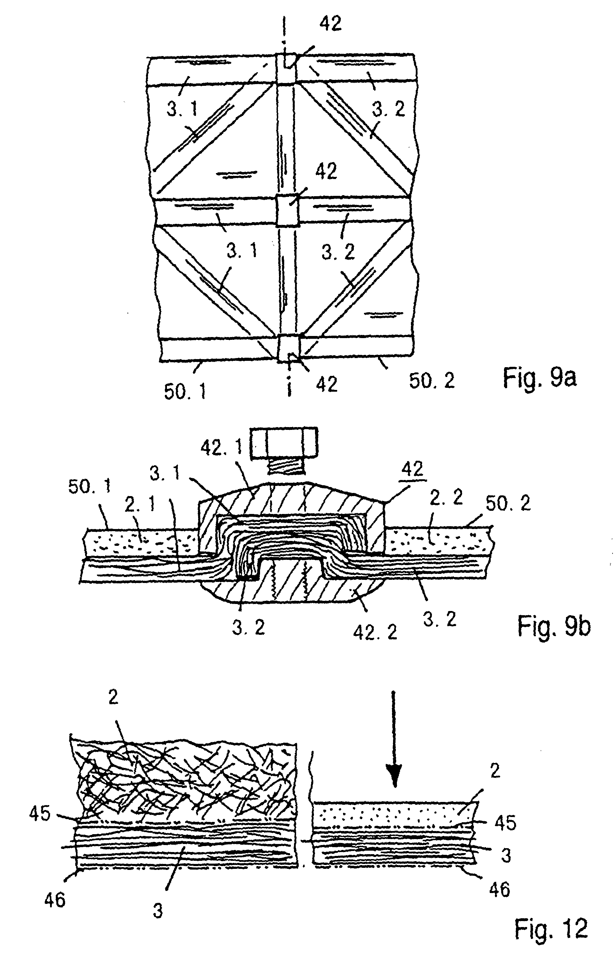

Im Beispiel von Fig. 9a, 9b werden kraftübertragende Verbindungen 42 zwischen den Endlosfaser-Strängen 3.1, 3.2 der beiden Teile 50.1, 50.2 hergestellt. Hier sind dies beispielsweise metallische Verbindungselemente 42.1, 42.2, die als Inserts formschlüssig in die Teile 50.1, 50.2 integriert sind. Diese bilden eine formschlüssige, durch Verschrauben einfach montierbare und auch demontierbare Verbindung.

Fig. 10a, b, c zeigt in drei verschiedenen perspektivischen Ansichten ein weiteres Beispiel einer Fahrzeugzelle 1 mit integrierter Raumgitter-Tragstruktur 4 aus Endlosfaser-Strängen 3, welche ebenfalls einen aus zwei Schalen a und b bestehenden Doppelboden 17 sowie eine erhöhte hintere Kastenstruktur 38 aufweist.

Das Beispiel von Fig. 11 illustriert das Zusammensetzen einer Fahrzeugzelle 1 aus verschiedenen Teilen 50. Hier sind wiederum ein zweiteiliger Doppelboden 17a, b mit oberer und unterer Bodenplatte 6a, 6b sowie vordere und hintere Seitenwände 34v, 34h, Dachträger 32, Querverbindungen 33A, 33B, 33C, eine Spritzwand 36 und eine hintere Kastenstruktur 38 als Teile der Fahrzeugzelle dargestellt. Die Teile 50 können auch als fertige Module 52 (z.B. mit Anschlüssen und Oberflächenkaschierung) ausgebildet sein, so dass die Fahrzeugzelle durch einfaches Verbinden der Module, z.B. mittels Verschraubung (Fig. 9), zusammenmontiert werden kann.

Fig. 13a, b zeigt ein weiteres Beispiel einer zweischaligen Doppelbodenstruktur 17, welche zusätzliche versteifende Verrippungen 22 und Sicken 25 in den Bodenplatten 6 aufweist.

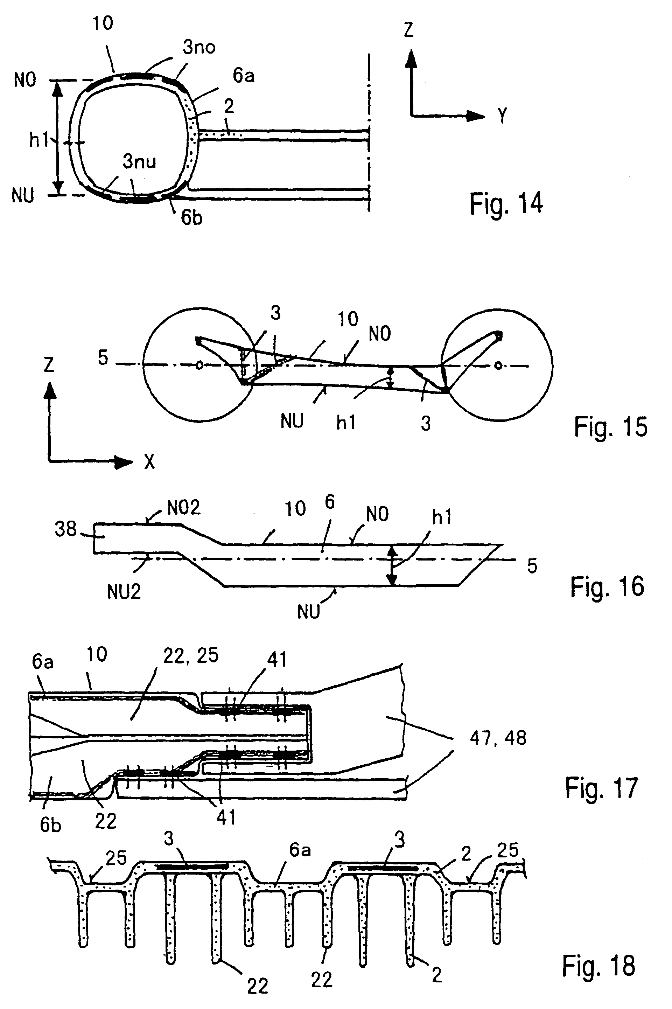

Die Fig. 14 - 16 zeigen Beispiele von Bodenstrukturen mit nicht-ebenen Bodenflächen NO, NU, dies sowohl bezüglich der Querrichtung Y in Fig. 14 wie bezüglich der Längsrichtung X in Fig. 15 und 16. Wesentlich ist jedoch immer dass der Höhenabstand h1 zwischen den beiden Niveaus genügend gross ist, so dass durch die Bodenstruktur ein Grossteil aller auftretenden Kräfte und Momente aufgenommen werden kann. Diese Kräfte und Momente sind im wesentlichen Massenkräfte im Stand, Fahrkräfte auf die Radaufhängungen im Betrieb sowie Stosskräfte von verschiedenen Seiten im Falle eines Crashs. Dabei müssen diese Kräfte durch die Fahrzeugzelle, d.h. Bodenstruktur mit Aufbau, aufgenommen werden, wobei immer ein wesentlicher Anteil durch die Bodenstruktur getragen wird.

Die Fig. 14 zeigt im Querschnitt einen gerundeten rohrförmigen Längsträger 14 (analog dem kastenförmigen Träger 15 in Fig. 4), der z.B. einen Seitenschweller bildet und ebenfalls aus zwei Halbschalen 6a und 6b gebildet wird.

Fig. 15 zeigt im Längsschnitt eine Bodenstruktur 10 mit geschwungenen, leicht nach vorne abfallenden oberer Bodenfläche NO und unterer Bodenfläche NU. Zur Illustration sind hier auch zusätzliche schräg verlaufende Endlosfaser-Bänder 3 in den Seitenwänden 11 gezeigt. Die Seitenwände 11 übernehmen u.a. auch Schubkräfte.

Fig. 16 zeigt eine abgestufte Bodenstruktur 10 mit einem tieferen vorderen Hauptboden 6a, 6b und einem kleineren, höheren hinteren Bodenteil 38a, 38b, wobei beide wiederum aus zwei Halbschalen a und b zusammengesetzt werden. Die Hauptbodenflächen NO, NU werden ergänzt durch die hinteren Bodenflächen NO2, NU2, mit einem kräfteübertragenden Übergang zwischen den unterschiedlichen Niveaus.

Fig. 17 illustriert eine Kräfte und Momente übertragende Verbindung von einem Hilfsrahmen 48 bzw. einer Radaufhängung und Crash-Elementen 47 auf eine Bodenstruktur 10. Dazu dienen einerseits grossflächige Kraftübertragungen z.B. mittels Kleben, sowie wie hier gezeigt Verschraubungen mit integrierten Krafteinleitungselementen 41, welche Kräfte auf die Endlosfaser-Stränge 3 in der Bodenstruktur übertragen. Diese Krafteinleitung auf die Bodenstruktur wird zusätzlich unterstützt durch Verstärkungen in Form von Rippen 22 und Sicken 25 in den hoch beanspruchten Zonen.

Fig. 18 illustiert eine solche Verstärkung und Versteifung durch Rippen 22 und Sicken 25 in der Langfaser-Matrix 2 in Kombination mit den integrierten Endlosfaser-Bändern 3. Dies ist hier an einer oberen Bodenhalbschale 6a dargestellt.

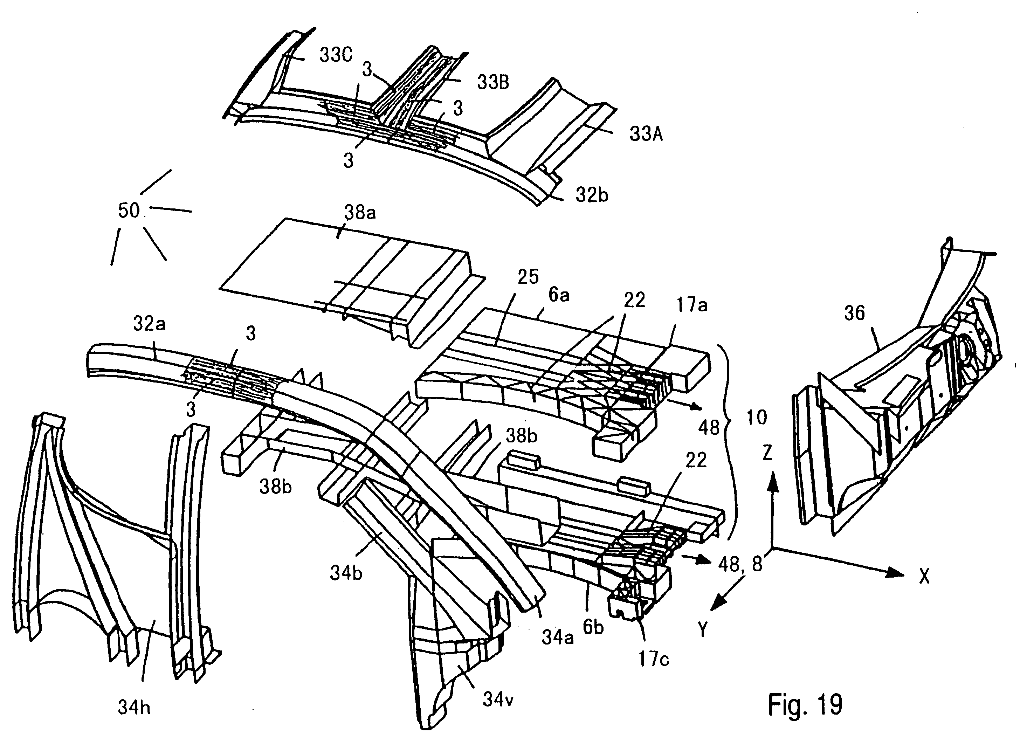

Fig. 19 zeigt ein weiteres Beispiel einer Fahrzeugzelle einer fünfplätzigen Limousine, ähnlich dem Beispiel von Fig. 11, welche sehr einfach aus relativ wenigen Teilen 50 zusammengesetzt wird. Diese Fahrzeugzelle besteht aus einer über die ganze Breite reichenden Frontwand oder Spitzwand 36 sowie je aus rechten und linken Teilen gespiegelt an der Mittelebene (X, Y), wovon in Fig. 19 nur die Teile der rechten Seite gezeigt sind.

Von folgenden Teilen besteht je ein rechter und ein linker Teil:
Bodenstruktur 10 mit
   - Bodenplatte vorne oben, 6a
   - Bodenplatte vorne unten, 6b
   - Bodenstruktur hinten oben 38a
   - Bodenstruktur hinten unten 38b
Rahmenaufbau 30 mit
   - Seitenwand hinten mit B- und C-Säule 34h
   - Seitenwand vorn 34v mit A-Säule 34b
   - Dachträger oben 32a mit A-Säule 34a
   - Dachstruktur mit Träger 32b, und Dachholmen 33A, 33B, 33C (an A-, B- und C-Säulen)

Von diesen Teilen bilden je die folgenden Teile zusammen Doppelbodenstrukturen bzw. geschlossene steife Kastenprofile mit relativ grossen Querschnittsflächen:
- die Bodenplatten 6a und 6b bilden einen Doppelboden 17,
- die Bodenstrukturen 38a und 38b bilden ebenfalls eine Doppelboden-Kastenstruktur 38,
- die Dachträger 32a mit A-Säule 34a und Dachstruktur 32b sowie die A-Säule 34b bilden zusammen einen geschlossenen Dachrahmen 32.

Insgesamt ist diese Fahrzeugzelle somit aus 17 Teilen zusammengesetzt. In Fig. 19 nicht dargestellt sind eine linke und rechte Türe sowie eine Heckklappe, welche als weitere separate Teile ebenfalls in der gleichen Bauweise mit Langfaser-Matrix und integrierten Endlosfaser-Bändern hergestellt werden. Auch die metallischen Träger bzw. Hilfsrahmen 48 für die Radaufhängungen und allfällige Crash-Elemente sind in der Fig. dargestellt, diese werden in die Bodenstruktur an den bezeichneten Stellen 48 integriert bzw. eingeschraubt, wobei die kraftaufnehmenden Bereiche der Bodenstruktur mit Rippen 22 und Sicken 25 zusätzlich zu den kraftaufnehmenden Endlosfaser-Bändern verstärkt sind. Zur Illustration sind im Dachbereich einige Endlosfaser-Bänder 3 eingezeichnet, um darzustellen, wie diese Endlosfaser-Bänder in die ganze Struktur integriert sind.

Das Zusammenfügen dieser Teile 50 zur ganzen Fahrzeugzelle 1 kann mittels Verschweissen der Thermoplast-Matrix, durch Kleben sowie durch kraftübertragende Verbindungen zwischen den Endlosfaser-Strängen erfolgen.

Als Matrix-Materialien eignen sich beispielsweise Thermoplaste wie Polypropylen (PP), Polyamide (PA), Polyethylen-Therephthalat (PET), Polybuthylen-Therephthalat (PBT) und als Faserverstärkungen vor allem Glasfasern, je nach Bedarf aber auch Kohle- oder Aramidfasern, mit einem Fasergehalt in den Endlosfaser-Strängen von z.B. 35 - 60 Vol% und in der Langfaser-Matrix von z.B. 15 - 25 Vol%. Die Stränge können unterschiedliche Querschnitte und Faseraufbauten aufweisen. Am einfachsten sind UD-Stränge mit parallelen Fasern, je nach Anwendung können aber auch breite, flache Bänder, beispielsweise auch in einer Kombination von längs- und diagonal orientierten Endlosfasern, eingesetzt werden.

Die Langfaser-Masse kann in flächigen Bereichen beispielsweise 2 - 4 mm Dicke aufweisen und die Endlosfaser-Bänder 3 beispielsweise eine Dicke von 2 - 5 mm und eine Breite von einigen Zentimetern.

Mit der erfindungsgemässen Fahrzeugzelle können grosse Gewichtsreduktionen im Vergleich zur herkömmlichen Stahlbauweise erreicht werden. Der Aufbau in Teilen 50 mit relativ kompakten Dimensionen erfordert für den Pressvorgang entsprechend kleinere Pressen und Pressenkräfte. Im Vergleich zur Fertigung von bisherigen selbsttragenden Stahlkarosserien sind dadurch wesentlich geringere Investitionen in Produktionsanlagen erforderlich.

Im Rahmen dieser Beschreibung werden die folgenden Bezeichnungen verwendet:
- NO: obere Bodenfläche, Niveau
- NU: untere Bodenfläche, Niveau
- h1: Niveau-Abstand
- 3no: 3 in NO
- 3nu: 3 in NU
- a, b: Halbschalen
- K1, K2, K3: Kräfte
- L1: Momentabstand
- X, Y, Z: Raumrichtungen
- 1: Fahrzeugzelle
- 2: Langfaser-Matrix, -Masse
- 3: Endlosfaser-Stränge, -Bänder
- 4: Tragstruktur
- 5: Achsebene
- 6: Bodenplatte
- 8: Vorderradaufhängung
- 9: Hinterradaufhängung
- 10: Bodenstruktur
- 11: vertikale Wände
- 14: gerundeter Längsträger
- 15: kastenförmige Längselemente
- 16: kastenförmige Querelemente
- 17: Doppelboden
- 18: querverlaufende Endlosfaser-Stränge
- 19: diagonale Endlosfaser-Stränge
- 21: halb-offene Trägerprofile
- 22: Verrippung, Rippen
- 23a, b: geschlossene Trägerprofile
- 25: Sicken
- 30: Rahmenaufbau
- 31: Seitenträger
- 31A, B, C: A, B, C-Säule
- 32: Dachträger
- 33: Querverbindungen, Dachholmen
- 34: Seitenwand
- 36: Spritzwand
- 37: hintere Querwand
- 38: hintere Kastenstruktur, Boden
- 40: Inserts, Einlagen
- 41: Krafteinleitungselement
- 42: Verbindungselement
- 43: Fixierelement
- 45: Verstärkungsgewebe
- 46: Oberflächenkaschierung
- 47: Crash-Elemente
- 48: Hilfsrahmen
- 50: Teile von 1, 10
- 52: fertige Module
- 54: Karosserie-Kunststoffteile

## Patentansprüche

1. Fahrzeugzelle aus faserverstärktem thermoplastischem Kunststoff, wobei eine formbildende, langfaserverstärkte thermoplastische Matrix (2) mit integrierten Endlosfaser-Strängen oder -Bändern (3), eine Tragstruktur (4) mit einer Bodenstruktur (10) bilden, **dadurch gekennzeichnet, daß** die Bodenstruktur (10) eine Bodenplatte (6) und im mittleren Bereich durchgehende längs verlaufende Endlosfaser-Stränge (3no) in einer oberen Bodenfläche (NO) und längs verlaufende Endlosfaser-Stränge (3nu) in einer unteren Bodenfläche (NU) aufweist, wobei die obere und die untere Bodenfläche durch vertikale Wände (11) verbunden sind und die Bodenstruktur mit einer Vorderradaufhängung (8) und einer Hinterradaufhängung (9) verbunden ist.

2. Fahrzeugzelle nach Anspruch 1, **dadurch gekennzeichnet, dass** die obere Bodenfläche (NO) oberhalb der Achsebene (5) und die untere Bodenfläche (NU) unterhalb der Achsebene liegt.

3. Fahrzeugzelle nach Anspruch 1 oder 2, **dadurch gekennzeichnet, dass** der Höhenabstand (h1) zwischen oberer und unterer Bodenfläche (NO, NU) mindestens 15 cm beträgt.

4. Fahrzeugzelle nach Aspruch einem der vorangehenden Ansprüche, **dadurch gekennzeichnet, dass** die Bodenstruktur (10) kastenförmige Längselemente (15) mit integrierten, längs verlaufenden Endlosfaser-Strängen (3) aufweist.

5. Fahrzeugzelle nach einem der vorangehenden Ansprüche, **dadurch gekennzeichnet, dass** die Bodenstruktur auch quer verlaufende (18) und diagonal verlaufende (19) integrierte Endlosfaser-Stränge (3) aufweist.

6. Fahrzeugzelle nach einem der vorangehenden Ansprüche, **dadurch gekennzeichnet, dass** die Bodenstruktur (10) mindestens bereichsweise einen kastenförmigen Doppelboden (17) mit integrierten Endlosfaser-Strängen (3) aufweist.

7. Fahrzeugzelle nach einem der vorangehenden Ansprüche, **dadurch gekennzeichnet, dass** die Bodenstruktur mindestens ein kastenförmiges Querelement (16) mit integrierten quer verlaufenden (18) Endlosfaser-Strängen aufweist.

8. Fahrzeugzelle nach einem der vorangehenden Ansprüche, **dadurch gekennzeichnet, dass** die Fahrzeugzelle kastenförmige Elemente enthält, welche aus zwei Halbschalen (a, b) zusammengesetzt sind.

9. Fahrzeugzelle nach einem der vorangehenden Ansprüche, **dadurch gekennzeichnet, dass** die Bodenstruktur (10) aus Langfasermasse bestehende Rippen (22) und Sicken (25) zur Versteifung aufweist.

10. Fahrzeugzelle nach einem der vorangehenden Ansprüche, **gekennzeichnet durch** einen mit der Bodenstruktur verbundenen Rahmenaufbau (30) mit Seitenträgern (31), Dachträgern (32) und Querverbindungen (33).

11. Fahrzeugzelle nach einem der vorangehenden Ansprüche, **dadurch gekennzeichnet, dass** insbesondere im Rahmenaufbau halb-offene, U-förmige Trägerprofile (21) mit integrierten Endlosfaser-Strängen (3) und mit Langfaser-Verrippung (22) vorgesehen sind.

12. Fahrzeugzelle nach einem der vorangehenden Ansprüche, **dadurch gekennzeichnet, dass** im Rahmenaufbau (30) geschlossene Trägerprofile (23) mit integrierten Endlosfaser-Strängen (3) vorgesehen sind.

13. Fahrzeugzelle nach einem der vorangehenden Ansprüche, **dadurch gekennzeichnet, dass** die Bodenstruktur eine vordere Spritzwand (36) und eine Hinterwand (37) oder eine hintere Kastenstruktur (38) aufweist.

14. Fahrzeugzelle nach einem der vorangehenden Ansprüche, **dadurch gekennzeichnet, dass** sie vorne und/oder hinten Crash-Elemente (47) mit einem vorgegebenen Deformationsweg aufweist, welche vorzugsweise auch zwischen der Bodenstruktur (10) und den Radaufhängungen (8, 9) wirksam sind.

15. Fahrzeugzelle nach einem der vorangehenden Ansprüche, **dadurch gekennzeichnet, dass** die Vorderradaufhängung und/oder die Hinterradaufhängung metallische Hilfsrahmen (48) aufweisen, welche in die Bodenstruktur (10) integriert sind.

16. Fahrzeugzelle nach einem der vorangehenden Ansprüche, **dadurch gekennzeichnet, dass** die Tragstruktur (4) integrierte metallische Inserts (40) enthält als Krafteinleitungs- (41) oder als Verbindungselemente (42).

17. Fahrzeugzelle nach einem der vorangehenden Ansprüche, **dadurch gekennzeichnet, dass** die Fahrzeugzelle und die Bodenstruktur aus mehreren Elementen oder Teilen (50) zusammengesetzt ist, wobei kraftübertragende Verbindungen (42) zwischen den Endlosfaser-Strängen (3) der verschiedenen Teile (50.1, 50.2) bestehen.

18. Fahrzeugzelle nach einem der vorangehenden Ansprüche, **dadurch gekennzeichnet, dass** die integrierten Endlosfaser-Stränge (3) eine Raumgitter-Tragstruktur (4) (space frame) bilden.

19. Fahrzeugzelle nach einem der vorangehenden Ansprüche, **dadurch gekennzeichnet, dass** sie aus einfach zusammenmontierbaren, fertigen Modulen (52) gebildet wird.

20. Fahrzeugzelle nach Anspruch 19, **dadurch gekennzeichnet, dass** zusätzlich eine flächige Gewebeverstärkung (45) und/oder eine Oberflächenkaschierung (46) für den Innenraum in die Module integriert ist.

21. Fahrzeugzelle nach einem der vorangehenden Ansprüche, **dadurch gekennzeichnet, dass** auf der Fahrzeugzelle bzw. dem Rahmenaufbau nicht-tragende flächige, z.B. aus Spritzguss gefertigte Kunststoff-Teile (54) als Karosserie-Aussenseite befestigt sind.

22. Verfahren zur Herstellung einer Fahrzeugzelle (1) aus faserverstärktem thermoplastischem Kunststoff, wobei plastifiziertes, langfaserverstärktes Matrixmaterial (2) mit vorkonsolidierten Endlosfaser-Strängen (3) zusammen verpresst wird damit eine Bodenstruktur (10) gebildet wird, **dadurch gekennzeichnet, daß** die Bodenstruktur (10), durchgehende längs verlaufende Endlosfaser-Stränge (3no) in einer oberen Bodenfläche (NO) und durchgehende längs verlaufende Endlosfaser-Stränge (3nu) in einer unteren Bodenfläche (NU) aufweist, dass die obere und die untere Bodenfläche durch vertikale Wände (11) verbunden sind und dass an die Bodenstruktur (10) eine Vorderradaufhängung (8) und eine Hinterradaufhängung (9) montierbar ist.

23. Verfahren nach Anspruch 22, **dadurch gekennzeichnet, dass** die obere Bodenfläche (NO) oberhalb der Achsebene (5) liegt und die untere Bodenfläche (NU) unterhalb der Achsebene liegt.

24. Verfahren nach Anspruch 22, **dadurch gekennzeichnet, dass** die Fahrzeugzelle aus Teilen (50) zusammengesetzt wird mit kraftübertragenden Verbindungen der Endlosfaser-Stränge (3.1, 3.2) zwischen verschiedenen Teilen (50.1, 50.2).

## Claims

1. Vehicle cell made of fibre-reinforced thermoplastic material, whereby a shape-defining, long-fibre-reinforced thermoplastic matrix (2) with integrated continuous fibre strands or strips (3) are forming a supporting structure (4) with a base structure (10), **characterised in that** the base structure (10) comprises a base plate (6) and in the central zone longitudinally running, uninterrupted continuous fibre strands (3no) in an upper base area (NO) and longitudinally running continuous fibre strands (3nu) in a lower base area (NU), wherein the upper and the lower base area are connected with vertical walls (11) and the base structure is connected with a front wheel suspension (8) and a rear wheel suspension (9).

2. Vehicle cell in accordance with claim 1, **characterised in that** the upper base area (NO) is situated above the axle plane (5) and the lower base area (NU) is situated underneath the axle plane.

3. Vehicle cell according to claim 1 or 2, **characterised in that** the height spacing (h1) between the upper and lower base area (NO, NU) amounts to at least 15 cm.

4. Vehicle cell in accordance with one of the preceding claims, **characterised in that** the base structure (10) comprises box-shaped longitudinal elements (15) with integrated continuous fibre strands(3) running longitudinally.

5. Vehicle cell according to one of the preceding claims, **characterised in that** the base structure also comprises continuous fibre strands (3) running in transverse direction (18) and diagonally (19).

6. Vehicle cell in accordance with one of the preceding claims, **characterised in that** the base structure (10) at least in certain areas comprises a box-shaped double base (17) with integrated continuous fibre strands (3).

7. Vehicle cell according to one of the preceding claims, **characterised in that** the base structure comprises at least one box-shaped transverse element (16) with integrated continuous fibre strands running in transverse direction (18).

8. Vehicle cell in accordance with one of the preceding claims, **characterised in that** the vehicle cell contains box-shaped elements, which are composed of two half-shells (a, b).

9. Vehicle cell according to one of the preceding claims, **characterised in that** the base structure (10) for stiffening purposes comprises ribs (22) and beadings (25) made of long-fibre mass.

10. Vehicle cell in accordance with one of the preceding claims, **characterised by** a frame construction (30) connected with the base structure with lateral support struts (31), roof support struts (32) and transverse connections (33).

11. Vehicle cell according to one of the preceding claims, **characterised in that** in particular in the frame construction semi-open, U-shaped support strut profiles (21) with integrated continuous fibre strands (3) and with long-fibre ribbing (22) are provided.

12. Vehicle cell in accordance with one of the preceding claims, **characterised in that** in the frame construction (30) closed support strut profiles (23) with integrated continuous fibre strands (3) are provided.

13. Vehicle cell according to one of the preceding claims, **characterised in that** the base structure comprises a front splashboard (36) and a rear wall (37) or a rear box structure (38).

14. Vehicle cell in accordance with one of the preceding claims, **characterised in that** it in front and/or at the rear comprises crash elements (47) with a predefined deformation distance, which in preference are also active between the base structure (10) and the wheel suspensions (8, 9).

15. Vehicle cell according to one of the preceding claims, **characterised in that** the front wheel suspension and/or the rear wheel suspension comprise metallic sub-frames (48), which are integrated into the base structure (10).

16. Vehicle cell in accordance with one of the preceding claims, **characterised in that** the supporting structure (4) as force transmission (41) or as connecting elements (42) contains integrated metallic inserts (40).

17. Vehicle cell according to one of the preceding claims, **characterised in that** the vehicle cell and the base structure are composed of several elements or components (50), wherein force-transmitting connections (42) exist between the continuous fibre strands (3) of the different components (50.1, 50.2).

18. Vehicle cell in accordance with one of the preceding claims, **characterised in that** the integrated continuous fibre strands (3) form a three-dimensional supporting structure (4) (space frame).

19. Vehicle cell according to one of the preceding claims, **characterised in that** it is formed out of easily assemblable, finished modules (52).

20. Vehicle cell in accordance with claim 19, **characterised in that** additionally a plane fabric reinforcement (45) and/or a surface lamination (46) for the interior is integrated into the modules.

21. Vehicle cell according to one of the preceding claims, **characterised in that** on the vehicle cell, resp., on the frame construction non-load-bearing plane plastic components (54) manufactured, e.g., by injection moulding, are affixed as the outside of the vehicle body.

22. Method for the manufacture of a vehicle cell (1) out of fibre-reinforced thermoplastic material, whereby molten, long-fibre-reinforced matrix material (2) with pre-consolidated continuous fibre strands (3) are pressed together with one another and with it a base structure (10) is formed, **characterised in that** the base structure (10) comprises uninterrupted continuous fibre strands running longitudinally (3no) in an upper base area (NO) and uninterrupted continuous fibre strands running longitudinally (3nu) in a lower base area (NU), that the upper and the lower base area are connected by vertical walls (11) and that a front wheel suspension (8) and a rear wheel suspension (9) are capable of being mounted on the base structure (10).

23. Method according to claim 22, **characterised in that** the upper base area (NO) is situated above the axle plane (5) and the lower base area (NU) is situated underneath the axle plane.

24. Method in accordance with claim 22, **characterised in that** the vehicle cell is assembled out of components (50) with force-transmitting connections of the continuous fibre strands (3.1, 3.2) between different components (50.1, 50.2).

## Revendications

1. Cellule de véhicule en matière synthétique thermoplastique renforcée par des fibres, dans laquelle une matrice façonnée (2), thermoplastique, renforcée par des fibres longues, avec des cordons ou des bandes (3) en filaments continus intégrés, forme une structure portante (4) avec une structure de plancher (10), **caractérisée en ce que** la structure de plancher (10) présente une plaque de plancher (6) et, dans la région centrale, des cordons en filaments (3no) continus à orientation longitudinale dans une surface de plancher supérieure (NO), ainsi que des cordons en filaments continus (3nu) à orientation longitudinale dans une surface de plancher inférieure (NU), dans laquelle les surfaces de plancher supérieure et inférieure sont reliées entre elles par des cloisons verticales (11), et la structure de plancher (10) est reliée à une suspension des roues avant (8) et à une suspension des roues arrière (9).

2. Cellule de véhicule suivant revendication 1, **caractérisée en ce que** la surface de plancher supérieure (NO) est située au-dessus du plan des essieux (5), et **en ce que** la surface de plancher inférieure (NU) est située en dessous du plan des essieux.

3. Cellule de véhicule suivant revendication 1 ou 2, **caractérisée en ce que** la différence de niveau (h1) entre les surfaces de plancher supérieure et inférieure (NO, NU) s'élève à au moins 15 cm.

4. Cellule de véhicule suivant l'une quelconque des revendications qui précèdent, **caractérisée en ce que** la structure de plancher (10) comporte des éléments longitudinaux (15) en forme de caissons avec des cordons en filaments continus (3) intégrés, à orientation longitudinale.

5. Cellule de véhicule suivant l'une quelconque des revendications qui précèdent, **caractérisée en ce que** la structure de plancher (10) comporte également des cordons en filaments continus (3) intégrés, à orientation transversale (18) et à orientation diagonale (19).

6. Cellule de véhicule suivant l'une quelconque des revendications qui précèdent, **caractérisée en ce que** la structure de plancher (10), comporte au moins dans certaines zones, un double fond (17) en forme de caisson avec des cordons en filaments continus (3) intégrés.

7. Cellule de véhicule suivant l'une quelconque des revendications qui précèdent, **caractérisée en ce que** la structure de plancher (10) comporte au moins un élément transversal (16) en forme de caisson avec des cordons en filaments continus (18) intégrés s'étendant transversalement.

8. Cellule de véhicule suivant l'une quelconque des revendications qui précèdent, **caractérisée en ce que** la cellule de véhicule comporte des éléments en forme de caissons, qui sont assemblés à partir de deux demi-coquilles (a, b).

9. Cellule de véhicule suivant l'une quelconque des revendications qui précèdent, **caractérisée en ce que** la structure de plancher (10) comporte, en vue du renforcement, des nervures (22) et des rainures (25) constituées d'une masse en fibres longues.

10. Cellule de véhicule suivant l'une quelconque des revendications qui précèdent, **caractérisée par** une structure de châssis (30) qui comporte des longerons latéraux (31), des longerons de toit (32) et des liaisons transversales (33), et qui est reliée à la structure de plancher (10).

11. Cellule de véhicule suivant l'une quelconque des revendications qui précèdent **caractérisée en ce que**, en particulier dans la structure du châssis (30), sont prévus des profilés de support en U semi ouvert (21), avec des cordons en filaments continus (3) intégrés ainsi qu'un nervurage (22) avec des fibres longues.

12. Cellule de véhicule suivant l'une quelconque des revendications qui précèdent **caractérisée en ce que**, dans la structure du châssis (30), sont prévus des profilés de support fermés (23) avec des cordons en filaments continus (3) intégrés.

13. Cellule de véhicule suivant l'une quelconque des revendications qui précèdent, **caractérisée en ce que** la structure de plancher (10) comporte un pare-boue antérieur (36) ainsi qu'une paroi postérieure (37) ou une structure postérieure en forme de caisson (38).

14. Cellule de véhicule suivant l'une quelconque des revendications qui précèdent, **caractérisée en ce qu'**elle comporte des éléments de collision (47) à l'avant et / ou à l'arrière avec un chemin de déformation prédéfini, éléments qui agissent de préférence aussi entre la structure de plancher (10) et les suspensions des roues (8, 9).

15. Cellule de véhicule suivant l'une quelconque des revendications qui précèdent, **caractérisée en ce que** la suspension des roues avant et / ou la suspension des roues arrière comportent des faux châssis métalliques (48) qui sont intégrés dans la structure de plancher (10).

16. Cellule de véhicule suivant l'une quelconque des revendications qui précèdent, **caractérisée en ce que** la structure portante (4) contient des inserts métalliques intégrés (40) en tant qu'éléments de transmission des forces (41) ou en tant qu'éléments de connexion (42).

17. Cellule de véhicule suivant l'une quelconque des revendications qui précèdent, **caractérisée en ce que** la cellule du véhicule, ainsi que la structure de plancher sont assemblées à partir de plusieurs éléments ou parties (50), et **en ce que** des connexions de transmission des forces (42) existent entre les cordons en filaments continus (3) des différentes parties (50.1, 50.2).

18. Cellule de véhicule suivant l'une quelconque des revendications qui précèdent, **caractérisée en ce que** les cordons en filaments continus (3) intégrés forment une structure portante en réseau spatial (space frame) (4).

19. Cellule de véhicule suivant l'une quelconque des revendications qui précèdent, **caractérisée en ce qu'**elle est formée à partir de modules prêts à l'emploi (52), qui se laissent assembler aisément.

20. Cellule de véhicule suivant la revendication 19, **caractérisée en ce qu'**un renfort tissé plat (45) et / ou un doublage de surface (46) sont en outre intégrés dans le module pour l'espace intérieur.

21. Cellule de véhicule suivant l'une quelconque des revendications qui précèdent **caractérisée en ce que**, sur la cellule de véhicule resp. sur la structure du châssis, se trouvent fixées des parties non portantes à deux dimensions fabriquées par moulage par injection à partir de matière synthétique (54), en tant que paroi extérieure de carrosserie.

22. Procédé pour la fabrication d'une cellule de véhicule (1) à partir de matière synthétique thermoplastique renforcée par des fibres, dans laquelle un matériau de matrice (2), plastifié, renforcé par des fibres longues, est comprimé ensemble avec des cordons en filaments continus (3) consolidés au préalable afin de former avec ceux-ci une structure de plancher (10), **caractérisé en ce que** la structure de plancher (10) comporte des cordons en filaments (3no) continus à orientation longitudinale dans une surface de plancher supérieure (NO), ainsi que des cordons en filaments (3nu) continus à orientation longitudinale dans une surface de plancher inférieure (NU), **en ce que** la surface de plancher supérieure et la surface de plancher inférieure sont reliées par des cloisons verticales (11), et **en ce qu'**une suspension des roues avant (8) et une suspension des roues arrière (9) peuvent être montées sur la structure de plancher (10)

23. Procédé suivant la revendication 22, **caractérisé en ce que** la surface de plancher supérieure (NO) est située au-dessus du plan des essieux (5), et **en ce que** la surface de plancher inférieure (NU) est située en dessous du plan des essieux.

24. Procédé suivant la revendication 22, **caractérisé en ce que** la cellule de véhicule est assemblée à partir de pièces (50), avec assemblage transmetteur des forces, des cordons en filaments continus (3.1, 3.2), entre les différentes parties (50.1, 50.2).
